# EUROPÄISCHE PATENTANMELDUNG

(11) **EP 1 408 021 A2**
(43) Veröffentlichungstag der Anmeldung: **14.04.2004**
(21) Anmeldenummer: 03019905.3
(22) Anmeldetag: 02.09.2003
(51) Int. Cl.: C05F 17/00, C05F 17/02

(54) **Verfahren und Vorrichtung zur biologischen Trocknung von Restmüll, Klärschlamm und/oder Biomasse**

(30) Priorität: 09.10.2002 DE 10247126
(71) Anmelder: Lurgi AG, 60295 Frankfurt am Main (DE)
(72) Erfinder: Herden, Hansjörg, 63110 Rodgau (DE); Böddeker, Hans-Joachim, 48157 Münster (DE); Samant, Gurudas, 35112 Fronhausen (DE); Schaefer, Kurt, 54498 Piesport (DE); Roth, Barbara, 60386 Frankfurt (DE); Roth, Juergen, 35398 Giessen (DE)

(57) **Zusammenfassung**

Bei einem Verfahren zur kontinuierlichen biologischen Trocknung von Restmüll wird dieser von einer Aufgabezone über einen geschlossenen Förderweg zu einer Abgabezone transportiert und dabei von Luft durchströmt, aerob verrottet und getrocknet. Um die bei der Verrottung gebildete Energie zur Trocknung des Restmülls einsetzen zu können, werden die entlang des Förderwegs fortlaufend gemessenen CO₂-Gehalte der Abluft zur Regelung der Luftmengenzufuhr mit der Maßgabe benutzt, dass CO₂-Gehalte von 0,05 bis 0.4 Vol.-% eingehalten werden.

## Beschreibung

Die Erfindung betrifft ein Verfahren und eine Vorrichtung zur kontinuierlichen biologischen Trocknung von Restmüll, Klärschlamm und/oder Biomasse, die von einer Aufgabezone über einen geschlossenen Förderweg zu einer Abgabezone transportiert und in Belüftungssektoren quer zur Förderrichtung von Luft durchströmt, aerob verrottet und auf einen Feuchtigkeitsgehalt von ≤ 15 Masse-% entwässert werden.

Durch Trocknung (Entwässerung) wird der biologische Abbau von Restmüll, Klärschlamm und Biomasse infolge aerober Verrottung drastisch reduziert und kommt im Idealfall völlig zum Erliegen. Der getrocknete Restmüll wird im allgemeinen in wenigstens zwei Kornfraktionen, beispielsweise von > 60 mm und < 60mm, aufgeteilt. Die Fraktion mit der kleineren Korngröße ist auf Grund ihrer spezifischen Zusammensetzung und ihres Brennwerts von ≤ ca. 6.000 kJ/kg als niederkalorische Fraktion lagerbar, während die Fraktion mit der größeren Korngröße einen deutlich höheren Brennwert von ≥ ca.17.000 kJ/kg erreichen kann und damit einer energetischen oder stofflichen Verwertung zuführbar ist.

Aus der DE-C-3637393 ist ein diskontinuierlich betriebenes Verfahren zur Kompostierung von Hausmüll oder hausmüllähnlichen Abfällen bekannt. Dabei werden durch eine dem mikrobiellen Wachstum, d.h. der aeroben Verrottung angepasste Luftzuführung ohne Bewegung des Hausmülls bzw. der Abfälle zunächst die biologisch leichter zersetzbaren organischen Bestandteile abgebaut. Die aerobe Verrottung wird durch Trocknung zum Stillstand gebracht, sobald die biologisch leichter zersetzbaren organischen Bestandteile des Hausmülls bzw. der Abfälle abgebaut worden sind. Bei den biologisch leichter zersetzbaren organischen Bestandteilen soll es sich im wesentlichen um die Zellflüssigkeiten handeln. Wenn diese abgebaut worden sind, erfolgt die Trocknung des Komposts, so dass sich eine bessere Kompostqualität bei günstigeren Herstellungskosten ergeben soll.

Eine Weiterentwicklung dieses Standes der Technik stellt das in der DE-A-19547062 beschriebene diskontinuierlich betriebene Verfahren dar, bei dem die organischen Abfälle zwei zeitlich aufeinander folgende Trocknungsstufen durchlaufen. Dabei werden die Abfälle in der ersten Stufe belüftet und hierdurch gleichzeitig teilentwässert; die bei der durch die Belüftung gestützte aerobe Verrottung entstehende Prozesswärme wird in der getrennten zweiten Stufe zur Resttrocknung der organischen Abfälle ausgenutzt. Die organischen Abfälle werden in der ersten Stufe auf eine Restfeuchte von 30 bis 28 Masse-% und in der zweiten Stufe mittels erwärmter durch die Abfälle hindurchströmende Luft auf eine Restfeuchte von ≤ 15 Masse-% getrocknet, d.h. in der zweiten Trocknungsstufe findet keine aerobe Verrottung mehr statt, weil dann die Temperatur auf Werte von 40 bis 45 °C absinkt.

Es ist die Aufgabe der vorliegenden Erfindung, das eingangs beschriebene Verfahren so zu gestalten, dass Restmüll, Klärschlamm und/oder Biomasse kontinuierlich entlang des gesamten Förderwegs gleichzeitig aerob verrottet und getrocknet und die bei der Verrottung gebildete Energie zur Trocknung von Restmüll, Klärschlamm und/oder Biomasse eingesetzt wird.

Die Lösung dieser Aufgabe besteht darin, dass die entlang des Förderwegs fortlaufend gemessenen CO₂-Gehalte der Abluft zur Regelung der Luftmengenzufuhr mit der Maßgabe benutzt werden, dass CO₂-Gehalte in der Abluft von 0.05 bis 0.4 Vol.-% eingehalten werden. Durch diese Maßnahme ist eine stetige Kontrolle des biologischen Abbaus und der gleichzeitigen Trocknung des Haufwerks entlang des Förderwegs gewährleistet.

Es kann durchaus ausreichen, wenn der CO₂-Gehalt der Abluft von 0.05 bis 0.4 Vol.-% nur im zweiten Abschnitt des Förderwegs eingehalten wird, um die aerobe Verrottung bei geringen Feuchtigkeitsgehalten von ≤ 20 Masse-% noch aufrecht zu erhalten und gleichzeitig die notwendige Energie freizusetzen, die zur Verdampfung der Feuchtigkeit auf die gewünschte Restfeuchte von ≤ 15 Masse-% erforderlich ist.

Im Rahmen der weiteren Ausgestaltung des erfindungsgemäßen Verfahrens werden die entlang des Förderwegs fortlaufend gemessenen Temperaturen des Haufwerks zur Regelung der Vorwärmtemperatur der Teilluftströme mit der Maßgabe eingesetzt, dass im Haufwerk eine Temperatur von ca. 60, vorzugsweise 55 bis 75°C eingehalten wird. Die Temperatur muss so hoch sein, damit im Haufwerk die biologische Aktivität aufrecht erhalten bleibt und durch die gleichzeitige Abfuhr der dabei gebildeten Feuchtigkeit die Trocknung des Haufwerks gewährleistet ist.

Eine besondere Ausbildung des Verfahrens besteht darin, dass die mittels eines Wärmetauschers der Abluft entnommene Prozesswärme mittels einer Wärmepumpe mit höherer Temperatur einem zweiten Wärmetauscher zugeführt wird, der die für die Erwärmung des Haufwerks angesaugte Luft im zweiten Verfahrensabschnitt vorwärmt.

Bei normalem Betrieb ist es in aller Regel ausreichend, die CO₂-Gehalte der Abluft und die Temperaturen des Haufwerks in Bereichen von 50 bis 60 %, 70 bis 80 % und 85 bis 95 % der Länge des Förderwegs zu messen.

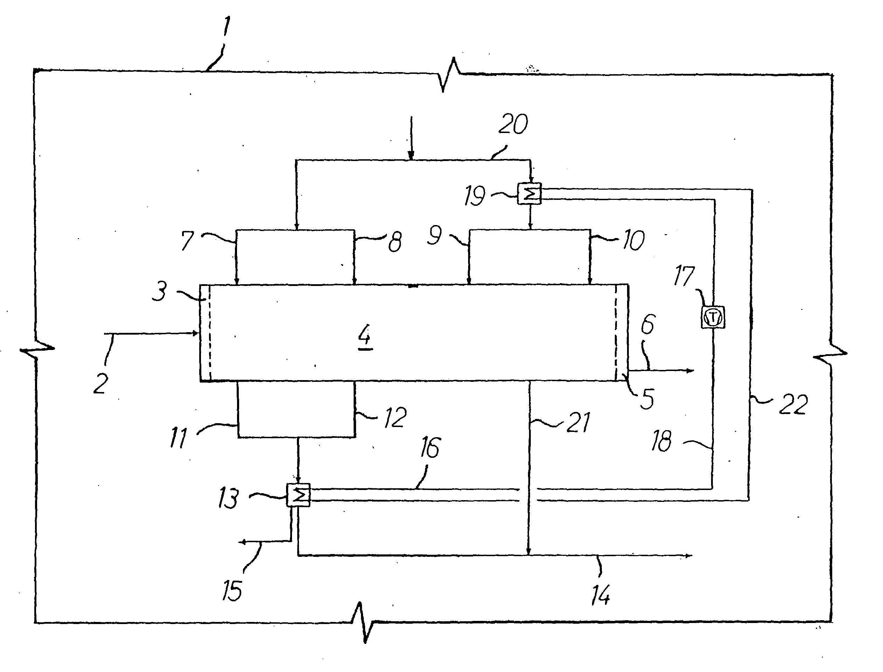

Ein Ausführungsbeispiel der Erfindung wird nachfolgend mittels des in der Zeichnung dargestellten Verfahrensfließbild im einzelnen erläutert.

Der in einer geschlossenen Halle (1) angelieferte Restmüll, der einen Feuchtigkeitsgehalt von 30 bis 40 Masse-% besitzt, wird zunächst auf eine Korngröße von < 120 mm zerkleinert und dann mittels eines Gurtförderers (2) über eine Schüttöffnung in die Aufgabezone (3) eines Rottetunnels (4) eingetragen, gleichmäßig verteilt, homogenisiert und in diesem mittels Schubböden schrittweise zu dessen Abgabezone (5) gefördert. Das Prozeßprodukt, das einen auf ca. 15 Masse-% verminderten Feuchtigkeitsgehalt aufweist, wird aus der Abgabezone (5) mittels eines Gurtförderers (6) ausgetragen und bis zur weiteren Verwertung, z.B. einer Zwischenlagerung, zugeführt. Während der Vorwärtsbewegung wird der gesamte auf dem Schubboden ruhende Restmüll von diesem transportiert. Im Boden des Rottetunnels (4) befinden sich im Abstand von 5 m, 10 m, 25 m und 30 m - bezogen auf den Anfang des Rottetunnels (4) - in Förderrichtung hintereinander und quer zur Förderrichtung nebeneinander angeordnete Belüftungszonen, die mit Luftzufuhrleitungen (7, 8, 9,10) verbunden sind und über die Umgebungsluft aus der Halle (1) mit einer Temperatur von 20 bis 55 ± 5 °C je nach Belüftungszone stetig dem Restmüll zugeführt wird. Die Dauerbelüftung bewirkt gleichzeitig sowohl eine intensive aerobe Verrottung als auch eine Trocknung des Restmülls. Mittels der bei der aeroben Verrottung des Restmülls frei werdenden Energie nimmt die Luft bei der Durchströmung des Restmülls Wärme und Feuchtigkeit auf und bewirkt dadurch eine Absenkung des Feuchtigkeitsgehalt des Restmülls. Die eine Temperatur von ca. 50°C und ein Feuchte von 100 % (Sättigung) aufweisende Abluft wird über die Luftabfuhrleitungen (11, 12) einem Warmwasser-Wärmetauscher (13) zugeleitet, in dem der Abluft die Wärmeenergie entzogen wird. Über Leitung (14) wird die auf einer Temperatur von ca. 30°C abgekühlte Abluft über einen Biofilter geleitet und an die Außenluft abgegeben; das anfallende Kondensat wird über Leitung (15) aus dem Prozess ausgeleitet. Zur besseren Ausnutzung der Wärme der Abluft wird diese über einen Wärmetauscher (13) geleitet, der über Leitung (16) mit einer Wärmepumpe (17) gekoppelt ist, so dass die Temperatur der Zuluft auf 55 bis 60°C erwärmt werden kann. Das über Leitung (18) aus der Wärmepumpe (17) abgeleitete Warmwasser wird durch einen Warmwasser-Wärmetauscher (19) geleitet und die dabei über Leitung (20) angesaugte, durch den Warmwasser-Wärmeaustauscher (19) strömende Hallenluft auf eine entsprechende Temperatur erwärmt. Die erwärmte Luft wird anschließend über die Luftzufuhrleitungen (9, 10) den im zweiten Abschnitt des Bodens des Rottetunnels (4) angebrachten Belüftungsöffnungen zum Zwecke der weiteren aeroben Verrottung und Trocknung des Restmülls zugeleitet. Über Leitung (21) wird die Abluft abgeführt und mit dem Abluftstrom der Leitung (14) vereinigt. Das im Warmwasser-Wärmetauscher (19) abgekühlte Warmwasser fließt über Leitung (22) zum Warmwasser-Wärmeaustauscher (13) zurück. Durch die Anordnung der Belüftungsöffnungen ist der Rottetunnel (4) in vier regelbare Abschnitte aufgeteilt, wobei die Regelung der Luftzufuhr über Drosselklappen erfolgt, deren Öffnung mittels der in den entsprechenden Zonen gemessenen CO₂-Gehalten der Abluft geregelt wird. Jeder Abschnitt ist mit einer ausreichenden Zahl von Lüftungsanschlüssen für das im Schubboden eingebaute Luftverteilungssystem versehen. Über diese Lüftungsabschnitte ist eine Entwässerung des Rottetunnels (4) möglich, wobei das Prozesswasser am Tiefpunkt eines jeden Belüftungsabschnitt aufgefangen und einem Sammelbehälter zugeleitet wird.

Der mit dem erfindungsgemäßen Verfahren erzielte Vorteil ist insbesondere darin zu sehen, dass die ermittelten CO₂-Gehalte der Abluft sowie die Temperaturen der organischen Abfälle als Regelgrößen für den gesamten Prozess eingesetzt werden und damit die dem Restmüll zugeführten Luftströme so über die gesamte Förderstrecke verteilbar sind, dass optimale CO₂-Gehalte der Abluft ebenso wie optimale Temperaturen in dem Restmüll eingehalten werden können.

## Patentansprüche

1. Verfahren zur kontinuierlichen biologischen Trocknung von Restmüll, Klärschlamm und/oder Biomasse, die von einer Aufgabezone über einen geschlossenen Förderweg zu einer Abgabezone transportiert und in Belüftungssektoren quer zur Förderrichtung von Luft durchströmt, aerob verrottet und auf eine Feuchtigkeitsgehalt von ≤ 15 Masse-% entwässert werden, **dadurch gekennzeichnet, dass** die entlang des Förderwegs fortlaufend gemessenen CO₂-Gehalte der Abluft zur Regelung der Luftmengenzufuhr mit der Maßgabe benutzt werden, dass CO₂-Gehalte in der Abluft von 0,05 bis 0,4 Vol.-% eingehalten werden.

2. Verfahren nach Anspruch 1, **dadurch gekennzeichnet, dass** nur im zweiten Abschnitt des Förderwegs CO₂-Gehalte in der Abluft von 0.05 bis 0.4 Vol.-% eingehalten werden.

3. Verfahren nach einem der Ansprüche 1 und 2, **dadurch gekennzeichnet, dass** die entlang des Förderwegs laufend gemessenen Temperaturwerte von Restmüll, Klärschlamm und/oder Biomasse zur Regelung der Vorwärmtemperatur der Teilluftströme mit der Maßgabe benutzt werden, dass Temperaturwerte im Restmüll von ca. 60°C, vorzugsweise 55 bis 75°C eingehalten werden.

4. Verfahren nach einem der Ansprüche 1 bis 3, **dadurch gekennzeichnet, dass** die mittels eines Wärmetauschers der Abluft entnommene Prozesswärme mittels einer Wärmepumpe mit höherer Temperatur einem zweiten Wärmetauscher zugeführt wird, durch den die für die Trocknung der organischen Abfälle benutzte Luft im zweiten Verfahrensabschnitt vorgewärmt wird.

5. Verfahren nach einem der Ansprüche 1 bis 4, **dadurch gekennzeichnet, dass** die Messung der CO₂-Gehalte der Abluft und der Temperaturwerte des Restmülls in Bereichen von 50 bis 60 %, 70 bis 80 % und 85 bis 95 % der Länge des Förderwegs erfolgt.

6. Vorrichtung zur kontinuierlichen biologischen Trocknung von Restmüll, Klärschlamm und/oder Biomasse, die von einer Aufgabezone (3) über einen geschlossenen Förderweg zu einer Abgabezone (5) transportiert und in Belüftungssektoren quer zur Förderrichtung von Luft durchströmt, aerob verrottet und auf einen Feuchtigkeitsgehalt von ≤ 15 Masse-% entwässert werden, wobei die entlang des Förderwegs fortlaufend gemessenen CO₂-Gehalte der Abluft zur Regelung der Luftmengenzufuhr mit der Maßgabe benutzt werden, dass CO₂-Gehalte in der Abluft von 0,05 bis 0,4 Vol.-% eingehalten werden, **gekennzeichnet durch** einen mit Schubböden ausgestatteten den Förderweg bildenden Rottetunnel (4) mit im Boden in Förderrichtung hintereinander und quer zur Förderrichtung nebeneinander angeordneten mit Luftzufuhrleitungen (7, 8, 9, 10) verbundenen Belüftungszonen und im Rottetunnel angebrachten Luftabfuhrleitungen (11, 12, 21).

7. Vorrichtung nach Anspruch 6, **dadurch gekennzeichnet, dass** vorzugsweise die im vorderen Teil des Rottetunnels (4) angebrachten Luftabfuhrleitungen (11, 12) mit einem mit dem Eingang einer Wärmepumpe (17) gekoppelten Wärmetauscher (13) und der Ausgang der Wärmepumpe mit einem, vorzugsweise mit den im hinteren Teil des Rottetunnels angebrachten Luftzufuhrleitungen (9, 10) gekoppelten Wärmetauscher (19) verbunden sind.
